(19) Europäisches Patentamt
European Patent Office
Office européen des brevets

(11) Publication number: **0 043 052**
**B1**

(12) # EUROPEAN PATENT SPECIFICATION

(45) Date of publication of patent specification: **11.12.85**

(51) Int. Cl.⁴: **C 08 J 9/04**, C 08 L 23/08

(21) Application number: **81104748.9**

(22) Date of filing: **22.06.81**

(54) **Open-cell ethylene ionomer polymer foams and process for the preparation thereof.**

(30) Priority: **25.06.80 JP 85231/80**

(43) Date of publication of application:
**06.01.82 Bulletin 82/01**

(45) Publication of the grant of the patent:
**11.12.85 Bulletin 85/50**

(84) Designated Contracting States:
**AT BE CH DE FR GB IT LI NL SE**

(56) References cited:
**GB-A-1 345 975**
**GB-A-1 542 407**

**CHEMICAL ABSTRACTS, vol. 87, no. 24, December 12, 1977, page 51, abstract 185682m Columbus, Ohio, USA**

(73) Proprietor: **THE DOW CHEMICAL COMPANY**
**2030 Dow Center Abbott Road P.O. Box 1967**
**Midland, MI 48640 (US)**

(72) Inventor: **Matsuki, Yutaka**
**757, Shonocho**
**Suzuka City Mie Prefecture (JP)**
Inventor: **Hamada, Itsuo**
**9-43, Sumiyoshi 2-chome**
**Suzuka City Mie Prefecture (JP)**

(74) Representative: **Casalonga, Axel et al**
**BUREAU D.A. CASALONGA OFFICE JOSSE & PETIT Baaderstrasse 12-14**
**D-8000 München 5 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 043 052 B1

**Description**

The present invention relates to open-cell olefin polymer foams and to foamable compositions and foaming processes for the preparation thereof. More specifically, it relates to foamable ethylenic ionomer compositions which provide open-cell ethylenic ionomer foam products having microporous cell membranes.

Heretofore, polyolefin resin foams have been used widely as shock-absorbing materials and heat-insulating materials because of such advantageous features of the polyolefin resins as good toughness, flexibility, elasticity and chemical inertness. However, most polyolefin resin foams proposed so far are substantially closed cell foams which exhibit less flexibility than often desired for such applications as flexible, heat-insulating materials, cushioning materials for clothing and shock-absorbing packaging materials for agricultural products requiring air permeability. Also, they are typically not suitable for use as base materials of filters for the pharmaceutical and chemical industries or for other industrial applications such as anti-pollution devices.

Several types of resin compositions for open-cell foams are known including those of rubber latex and urethane foams. However, these compositions are difficult to expand to very low densities and the resulting foams are generally poor in water resistance, chemical resistance and light-resistance.

Japanese Patent Kokai No. 47(1972)-1,996 discloses a process for producing an open-cell, fluid-permeable polyolefin resin foam having uniformly microporous cell membranes, by adding a low-boiling blowing agent and oxides of metals belonging to Groups Ia, IIa and IIb of the periodic table to an ethylene/vinyl ester copolymer resin or ethylene/unsaturated carboxylate copolymer resin; retaining the resultant mixture for at least 10 minutes in an extruder at a temperature from about 20°C below the crystalline melting point of said copolymer resin to 5°C above the crystalline melting point; and then extruding the resin mixture into a zone of lower pressure. However, this process has several drawbacks including the necessity of large-scale extrusion-expansion equipment, difficulty in obtaining homogeneous crosslinking non-uniformity of the open-cell foam and the instability of the extrusion-foaming process.

In a series of intensive studies, the present inventors have developed foamable polymer compositions which are usable for commercial-scale production of flexible, open-cell foams having a desirable fluid permeability toward both gaseous and liquid fluid materials as well as good water, chemical, and light resistance.

In accordance with the present invention, it has been found that foamable polymer compositions composed of (a) certain selected ethylenic ionomer resins and (b) a blowing agent can be suitably used for commercial-scale production of flexible, highly expanded (i.e., relatively low density) open-cell, fluid permeable foam products having relativley uniform microporous cell membranes and having good water and chemical resistance as well as good UV light stability. Accordingly, in one aspect the present invention is a method for making a flexible, open-cell, fluid permeable ethylenic ionomer foam product comprising the steps of forming under elevated temperature and pressure relative to atmospheric temperature and pressure a flowable gel which comprises (a) an ethylenic ionomer which (1) is crosslinked by metal ions; (2) contains from 85 to 98.5 mol percent of ethylene polymerized therein; and (3) has a crystallization initiating temperature, T, in degrees centigrade which satisfies the following Formula I:

$$102-3.02\ (98.5-A) \geq T \geq 102-9.29\ (98.5-A) \qquad \text{I}$$

wherein A represents the ethylene content of said ionomer in mol percent, and (b) a suitable blowing agent, and thereafter extruding the resultant gel into a zone of lower pressure and temperature to form the open-cell ethylenic ionomer foam product.

In another aspect, the present invention is an open-cell ethylenic ionomer foam product resulting from the expansion or foaming of the aforementioned foamable composition.

The open-cell ethylenic ionomer foam products provided by the present invention are useful as flexible packaging materials, as cushioning materials for clothing and the like, as insulating materials and as filter media for various commercial applications as well as for various pollution control uses and the like.

Figure 1 is a graph illustrating the requisite relationship between the ethylene content and the crystallization initiating temperatures for ethylenic ionomers suitable for use in the practice of the present invention. In this graph, the line segment BC represents the requirement that the ethylenic ionomer contains at least 85 mol percent of ethylene polymerized therein. The line segment AB in Figure 1 represents the lower-most boundary or limitation for the crystallization initiating temperature T as a function of ethylene content for ethylenic ionomers suitable for use in the present invention. It is a graphical representation of the requirement in the Formula I that $T \geqq 102-0.29\ (98.5-A)$. Similarly, the line segment AC in Figure 1 is a graphical representation of the Formula I requirement that $T \leqq 102-3.02(98.5-A)$ and thereby represents the uppermost boundary or limitation for the crystallization initiating temperature as a function of ethylene content for the ethylenic ionomers employed in the practice of this invention.

In addition to graphically illustrating by the area circumscribed by the line segments AB, AC and BC the requisite combination of ethylene content and crystallization initiating temperatures characteristic of ethylenic ionomers suitable for use herein, Figure 1 also shows coordinates representing the combination

of those two parameters for the ethylenic ionomers employed in Examples 1—12 and Reference Experiments 1—8. The coordinates referring to the various Examples are represented by the symbol ⊙ accompanied by the corresponding Example number and the coordinates referring to the various Reference Experiments are represented by the symbol X accompanied by the corresponding Reference Experiment Number.

Figure 2 is a graph illustrating the relationship between the crystallization initiating temperature and the proportion of open cells in the resultant foams for the various ethylenic ionomers employed in Examples 7—10 and Reference Experiments 6—8. In this figure, the solid line shows the proportion of cells interconnected through relatively large pores as measured by the described reduced pressure water impregnation method. The broken line shows the proportion of cells interconnected through micropores as measured by the described air pycnometer method. $T_I$ and $T_{II}$, respectively, in Figure 2 show the lower and upper limits of the crystallization initiating temperatures for the ethylenic ionomers employed in Examples 7—10 and Reference Experiments 6—8.

As indicated, the ethylenic ionomers employed in the practice of the present invention are required to be crosslinked by metal ions, to contain from 85 to 98.5 mol percent of ethylene polymerized therein and to have a crystallization initiating temperature, T (°C), defined by Formula I.

The limitation on the crystallization initiating temperature is one of the key factors for obtaining open-cell foams having uniformly microporous cell membranes. With an ethylenic ionomer having a combination of ethylene content and crystallization initiating temperature outside the scope corresponding to the closed domain defined by the line segments AB, AC and BC in Figure 1, open-cell foam having suitably uniform microporous cell membranes are not obtained. The reason why such an interrelation between the ethylene content and the crystallization initiating temperature of the ethylenic ionomer has an influence on the properties of the resultant foam is not clear. Perhaps outside the domain defined by Formula I, the ethylenic ionomer is crystallized simultaneously with expansion in the foaming process causing uneven cell membranes and heterogeneous microporosity.

If the ethylene content of the ethylenic ionomer is smaller than 85 mol percent, the ethylenic ionomer itself becomes very soft and almost unable to retain a predetermined shape in the foaming process. Also, such ethylenic ionomer resin compositions cannot be highly expanded because the resultant foam will undergo severe shrinkage and/or show a very bad appearance with many wrinkles. On the other hand, if the ethylene content is higher than 98.5 mol percent, a substantially open-cell foam will not usually be obtained or be acceptable because of severe shrinkage or deformation caused by large internal blow holes.

Preferably, the ethylenic ionomer to be used in the present invention should have a melt index (MI) ranging from 0.1 to 30 g/10 min as measured according to ASTM D1238-57T.

Among the ethylenic ionomers defined by Formula I and as usable in the present invention, it is preferable to use those ethylenic ionomers more narrowly defined by Formula II:

$$102-3.02(98.5-A) \geqq T \geqq 102-8.64(98.5-A) \qquad \text{II}$$

wherein A is the ethylene content of the ethylenic ionomer and ranges from 92 to 98.5 mol percent, and T in °C is the crystallization initiating temperature of the ionomer. The physical properties of the resultant foams, the ease of foaming and the stability of a continuous foaming operation as well as the stability of foams having large cross-sectional areas are important advantages achieved with the preferred ionomers defined by Formula II.

More preferable examples of the ethylenic ionomers according to the present invention are copolymers composed of ethylene and an alpha, beta-ethylenically unsaturated carboxylic acid which is partially or entirely crosslinked by metal ions. In some cases they are composed of ethylene, the unsaturated carboxylic acid, and a $C_1$—$C_6$ alkyl ester of an alpha, beta-ethylenically unsaturated carboxylic acid. The copolymers contain A, B, C and D mols of the units represented by the following chemical Formulas (a), (b), (c) and (d), respectively:

$$-(CH_2-CH_2)- \qquad \text{(a)}$$

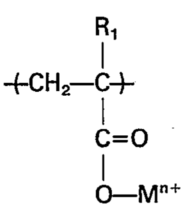

(b)

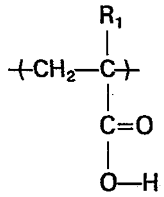 (c)

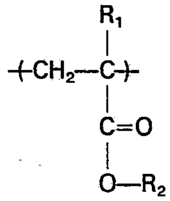 (d)

wherein $R_1$ represents a hydrogen atom or a methyl group, $R_2$ represents an alkyl group having 1 to 6 carbon atoms, M represents a metallic element and n is an integer ranging from 1 to 3; and these units are present within the ranges defined by the following Formulas (1), (2) and (3):

$$\frac{B+C+D}{A+B+C+D}\times 100=\text{from 1.5 to 15} \quad (1)$$

$$\frac{B+C}{B+C+D}\times 100=\text{from 20 to 100} \quad (2)$$

$$\frac{B}{B+C}\times 100\geqq 10 \quad (3)$$

The copolymers satisfying these conditions may be produced by the methods of Japanese Patent Publication No. 49(1974)-31,556 or Japanese Patent Kokai No. 50(1975)-8,885.

As blowing agents, any of the well-known thermally decomposable chemical blowing agents or volatile organic blowing agents may be used. However, more preferable for the present invention are volatile organic blowing agents having boiling points lower than the melting point of the ethylenic ionomer used. Typical examples of such preferable volatile organic blowing agents include lower hydrocarbons such as propane, butane, pentane, pentene and hexane as well as halogenated hydrocarbons such as methylene chloride, methyl chloride, trichlorofluoromethane, dichlorofluoromethane, chlorodifluoromethane, chlorotrifluoromethane, dichlorodifluoromethane, 1,1-difluoroethane, 1-chloro-1,1-difluoroethane, 1,2-dichlorotetrafluoroethane and chloropentafluoroethane. These volatile organic blowing agents may be used individually or as mixtures.

Typical examples of preferable chemical blowing agents include azodicarbonamide, azobisisobutyronitrile, dinitrosopentamethylenetetramine and paratoluenesulfonyl hydrazide, etc. These chemical blowing agents may be used singly or as mixtures or as mixtures with the volatile organic blowing agents.

In the polymer composition composed of an ethylenic ionomer and a blowing agent according to the present invention, its blowing agent content may be selected appropriately depending on the types of the ionomer and blowing agent used as well as on the properties desired for the resultant open-cell foam. In ordinary cases, however, the blowing agent content ranges from 5 to 50 parts by weight per 100 parts by weight of the ethylenic ionomer.

The blowing agent and ethylenic ionomer components may be admixed and kneaded by any suitable means such as a single-screw extruder, twin-screw extruder or Banbury mixer. Also, a preliminary blend of the ethylenic ionomer and the blowing agent may be prepared as a dryblend or masterbatch or by impregnating the ethylenic ionomer with the blowing agent. Alternatively, the blowing agent may be mixed with the ethylenic ionomer in a molten or heat-plastified state just before expansion. Further, the polymer compositions may be crosslinked with electron beams or a chemical crosslinking agent before expansion, if desired.

The foamable polymer composition of the present invention may be expanded into a foam by conventional methods. Thus, for example, a conventional extrusion foaming technique can be employed in which the polymer plus blowing agent is continuously heated and/or worked in an extruder to be melted or heat-plastified at an elevated temperature and pressure. Then, the resultant molten or heat-plastified mixture is extruded into a zone of lower pressure and temperature to expand into a foam. Alternatively, a batch method may be used in which the foamable polymer composition of the present invention is melted at an elevated temperature under high pressure and then the pressure is removed to expand the molten

mixture. However, the polymer composition of the present invention is particularly effective when it is to be expanded by extrusion, especially to twenty or more times its original volume.

The foamable polymer composition according to the present invention may contain minor amounts of lubricating and nucleating agents such as zinc stearate or similar metal soaps and finely-ground calcium silicate or the like inorganic salts. Also, the polymer composition of the present invention may contain an ultraviolet light absorber, anti-oxidizing stabilizer and/or colorant. Further, to improve the physical properties of the resulting foam, a thermoplastic synthetic resin may be added to the polymer composition in an amount that does not impede formation of open cells.

The foamable polymer composition may be expanded into almost any shape including sheets, blocks, rods, and pipes, or it may be expanded in composite or clad forms with other materials.

The present invention is further illustrated by the following examples and the accompanying reference experiments in which the effects of the present invention were evaluated in terms of the properties and parameters described below. Also, all parts and percentages are given on a weight basis unless otherwise specified.

(1) Ethylene content of the ionomer

First, the carbon content is determined by quantitative elementary analysis of the ionomer. Then, the ethylene content of that ionomer is determined from a preplotted calibration curve of ethylene vs. carbon content of the ionomer.

(2) Crystallization initiating temperature of the ionomer

A specimen of the ionomer is heated at a rate of 10°C/min until melted and is then cooled at a rate of 10°C/min until it begins to crystallize as determined with a differential scanning calorimeter (Model IB manufactured by The Perkin-Elmer Corp.). The temperature at which crystallization is thus observed to begin is the crystallization initiating temperature for the purposes of the present invention.

(3) Melt index (MI) of the ionomer

The melt index of the ionomer is determined in accordance with ASTM D1238-57T.

(4) Open (interconnected) cell proportion of the foam

The open cell proportion of foam prepared from a foamable polymer composition of the present invention or from a foamable reference polymer composition is determined by the following two methods.

(a) Water impregnation method under reduced pressure

The foam is cut into a cubic specimen of 30×30×30 mm. After measuring its weight, the specimen is immersed in water at 15°C for 15 minutes in an atmosphere having a reduced pressure of $4\times10^4$Pa. Then, after breaking the vacuum, the specimen is taken out of the water and its surface is lightly wiped with a gauze wet with ethanol. Thereafter, the weight of the specimen is measured again and the open cell proportion calculated from the following formula:

$$\text{Open cell proportion } (\%) = \frac{W_1 - W_0}{V - W_0/d} \times \frac{\text{gram water}}{\text{cm}^3} \times 100$$

where $W_0$ represents the initial weight in grams (g) of the specimen, $W_1$ is the weight in grams (g) of the specimen impregnated with water, V is the volume ($cm^3$) of the cubic specimen, and d is the density ($g/cm^3$) of the ionomer resin employed in the foam.

(b) Air pycnometer method

In this method, the open cell proportion is determined with an air pycnometer (Model 930 manufactured by Toshiba-Beckman Co., Ltd.) in accordance with ASTM D2856.

(5) Visual evaluation of open cells

In the same manner as in the foregoing water impregnation method, a cut foam specimen is immersed in water containing red ink and a surfactant instead of pure water. Then, the thus treated specimen is cut and visually inspected to observe how the red ink is distributed over the cut surface of the specimen. In addition, the surface of another specimen of the foam is microscopically examined to see the distribution of fine cells ranging from 5 µm to 100 µm in size.

Examples 1 through 6

For extrusion, there was used an extrusion line composed of an extruder with a barrel diameter of 65 mm having a kneading zone at the forward end of its screw, a blowing agent feed line connected to the kneading zone, a heat exchanger coupled to the extruder outlet for controlling the temperature of the kneaded molten polymer and a die having an orifice of 8.0 mm in diameter connected to the heat exchanger outlet. Each ionomer shown in Table I was fed into the extruder and was heated, melted and

kneaded therein together with 25 parts, per 100 parts of the ionomer, of dichlorodifluoromethane as a blowing agent fed under pressure through the blowing agent feed line, and the polymer composition was extruded continuously through the die into a zone at atmospheric pressure to be expanded into a round foamed rod.

The foaming temperature of each ionomer was set at a level suitable for obtaining a foam with uniform quality and such suitable temperature was determined in each case by varying the temperature at the point of extrusion foaming above the melting point of each ionomer.

The properties of the resultant foams are summarized in Table I along with the ethylene content and crystallization initiating temperature of each ionomer used. The resultant foams of Examples 1 through 6 had uniformly distributed open cells with an average size of 0.5 mm.

References 1 through 5

Except for the fact that other ionomers were used as shown in Table I, the same procedures and conditions as those used in Examples 1 through 6 were repeated.

Unlike the foams resulting from Examples 1 through 6 (i.e., which contained 90% or more of open cells as determined by air pycnometer), the resultant foams of these reference experiments all had substantially closed-cell structures, with their open cells, if any, being confined only to small areas in their surface skins.

TABLE I

| | Ionomers | | | Open cell proportion (vol %) | |
|---|---|---|---|---|---|
| | Ethylene content (mol %) | Crystallization initiating temperature (°C) | Foam density (g/cm$^3$) | Water impregnation method under reduced pressure | Air pycnometer method |
| Example 1 | 97 | 92 | 0.018 | 70 | 98 |
| 2 | 92 | 50 | 0.020 | 70 | 98 |
| 3 | 92 | 80 | 0.018 | 70 | 98 |
| 4 | 86 | −14 | 0.040 | 60 | 90 |
| 5 | 86 | 64 | 0.033 | 70 | 95 |
| 6 | 98.5 | 102 | 0.022 | 60 | 90 |
| Reference 1* | 99 | 102 | 0.033 | 3 | Less than 10 |
| 2* | 97 | 80 | 0.020 | 2 | " |
| 3* | 92 | 40 | 0.022 | 3 | " |
| 4* | 86 | −20 | 0.045 | 10 | " |
| 5* | 86 | 70 | 0.031 | 3 | " |

*Not an example of the present invention.

Examples 7 through 10 and references 6 through 8

In Examples 7 through 10 and References 6 through 8, the same procedures and conditions as were used in Examples 1 through 6 were repeated except that the ethylenic ionomers used all contained 94 mole percent of ethylene but had varied crystallization initiating temperatures as shown in Table II. The properties of the resultant foams are summarized in Table II and are also shown in Figure 2 of the accompanying drawings.

As is clearly seen from Table II and Figure 2, the use of the foamable ionomer compositions of the present invention provided foams which have, as evidenced by the aforementioned water impregnation method under reduced pressure, open cells interconnected with each other through relatively large pores in their walls, as well as cells interconnected with each other through micropores which are not detected by the water impregnation method owing to a higher resistance to water absorption but which are detectable by the aforementioned air pycnometer method.

TABLE II

| | Ionomers: Ethylene content (mol %) | Ionomers: Crystallization initiating temperature (°C) | Foam density ($g/cm^3$) | Open cell proportion (vol %): Water impregnation method under reduced pressure | Open cell proportion (vol %): Air pycnometer method |
|---|---|---|---|---|---|
| Example 7 | 94 | 61 | 0.020 | 30 | 60 |
| 8 | 94 | 65 | 0.018 | 70 | 98 |
| 9 | 94 | 73 | 0.019 | 80 | 98 |
| 10 | 94 | 86 | 0.018 | 70 | 98 |
| Reference 6* | 94 | 44 | 0.023 | 2 | 7 |
| 7* | 94 | 52 | 0.021 | 3 | 10 |
| 8* | 94 | 90 | 0.020 | 3 | 10 |

*Not an example of the present invention.

Examples 11 and 12

In Examples 11 and 12, the ethylenic ionomers used both contained 95 mol percent ethylene polymerized therein but had crystallization initiating temperatures of 70°C and 75°C, respectively. In such examples, each of such ionomer-containing resin compositions was expanded at various temperatures in order to determine the maximum and minimum foaming temperatures at which substantially open-cell, homogeneous quality foams could be obtained. The difference between such maximum and minimum acceptable foaming temperature evidences the degree of sensitivity of the respective foamable compositions to the temperature at which they are foamed and thereby reflects the tolerance (or operating flexibility) of such compositions in terms of the range of temperatures at which they can be suitably expanded into acceptable open-cell foam products. Such suitable foaming temperature range as thus determined is herein designated as the favorable foaming temperature range (in centigrade degrees) and the results of such determinations are shown in Table III below.

Examples 13a through 13d

With the exception that the ethylenic ionomers of Examples 7 through 10, respectively, were used, the same procedures and conditions as those used in the foregoing Examples 11 and 12 were repeated to determine the favorable foaming temperature ranges for these respective ionomer-containing resin compositions. The results of these determinations are also shown in Table III.

TABLE III

Ionomers

| | Ethylene content (mol %) | Crystallization initiating temperature (°C) | Favorable foaming temperature range (°C) |
|---|---|---|---|
| Example 11 | 95[1] | 70 | 1 |
| 12 | 95[1] | 75 | 15 |
| 13a | 94[2] | 61 | 1 |
| 13b | 94[2] | 65 | 10 |
| 13c | 94[2] | 73 | 15 |
| 13d | 94[2] | 86 | 14 |

[1]From Formula II, when the ethylene content, A, is 95 mol percent, the crystallization temperature, T, should preferably be from 71.8 to 91.4°C.

[2]From Formula II, when the ethylene content, A, is 94 mol percent, the crystallization initiating temperature, T, should preferably be from 63.1 to 88.4°C.

As can be clearly seen from Table III, the ionomers which have the crystallization initiating temperatures represented by Formula II are more preferable than the other ionomers shown in Table III, because of the broader range of the favorable foaming temperatures which are exhibited thereby.

$$102-3.02\ (98.5-A) \geqq T \geqq 102-8.64\ (98.5-A) \qquad \text{II}$$

Evaluation of the foam of Example 3 as compared with conventional ethylenic ionomer foam and soft polyurethane foam.

The ethylenic ionomer foam obtained in the previously described Example 3 was evaluated in terms of its compressive strength, weather resistance and water resistance measured as described hereinbelow, as compared with the ethylenic ionomer foam of the previously described Reference 3 and as compared with a nonrigid polyurethane foam according to the prior art.

(1) Compressive strength

The compressive strength of each specimen was measured in accordance with JIS K6767.

(2) Weather resistance

For measuring the weather resistance, each specimen was exposed to the outdoor atmosphere for 6 months, and its weather resistance was evaluated in terms of reduction in its compressive strength in this period, the results of which are summarized in Table IV as follows:

Foams showing reduction in compressive strength smaller than 30% — A

Foams undergoing 30% or greater reduction in compressive strength — B

(3) Water resistance

For measuring the water resistance, each foam specimen was left to stand for one month in an atmosphere set at 50°C and 90% relative humidity, and its water resistance was evaluated in terms of reduction in its compressive strength in this period, the results of which are also summarized in Table IV as follows:

Foams showing reduction in compressive strength smaller than 30% — A

Foams undergoing 30% or greater reduction in compressive strength — B

As is apparent from Table IV, the foam obtained from the polymer resin composition of the present invention has good flexibility, almost comparable to that of soft polyurethane foams, and the weather resistance and water resistance thereof are far higher than those of such soft polyurethane foam.

TABLE IV

| | Foam of Example 3 | Nonrigid polyurethane foam | Foam of Reference 3 |
|---|---|---|---|
| Density ($g/cm^3$) | 0.018 | 0.015 | 0.022 |
| Open Cell Proportion (%) (air pycnometer method) | 98 | 98 | Less than 10 |
| Compressive Strength ($kg/cm^2$) (50% compression) | 0.10 | 0.07 | 0.6 |
| Weather Resistance | A | B | A |
| Water Resistance | A | B | A |

**Claims**

1. A method for making a flexible, open-cell fluid permeable ethylenic ionomer foam product comprising the steps of: forming under elevated temperature and pressure relative to atmospheric temperature and pressure, a flowable gel comprising (a) an ethylenic ionomer which (1) is crosslinked by metal ions, (2) contains 85 to 98.5 mol percent ethylene polymerized therein, and (3) has a crystallization initiating temperature, T, in °C that satisfies the Formula I:

$$102-3.02\ (98.5-A) \geqq T \geqq 102-9.29\ (98.5-A) \qquad \text{I}$$

wherein A represents the ethylene content of the ionomer in mol percent; and (b) a blowing agent and thereafter extruding the resultant gel into a zone of lower pressure and temperature to form the open-cell ethylenic ionomer foam product.

2. The method of Claim 1 wherein the ethylene content, A, of the ethylenic ionomer is from 92 to 98.5 mol percent and the crystallization initiating temperature, T°C, satisfies the Formula II:

$$102-3.02\ (98.5-A) \geqq T \geqq 102-8.64\ (98.5-A) \qquad \text{II}$$

3. The method of Claim 1, wherein the ethylenic ionomer has a melt index of from 0.1 to 30 g/10 min as measured by ASTM D1238-57T.

4. The method of Claim 2, wherein the blowing agent is a volatile organic compound.

5. A flexible, open-cell fluid permeable ethylenic ionomer foam produced by the process of Claims 1—4.

6. The ethylenic ionomer foam of Claim 5, wherein the ethylene content, A, of said ionomer in mol percent is from 92 to 98.5 and wherein the crystallization initiating temperature, T, of said ionomer satisfies the Formula II:

$$102-3.02\ (98.5-A) \geqq T \geqq 102-8.64\ (98.5-A) \qquad \text{II}$$

7. The ethylenic ionomer foam of Claim 6, wherein said ionomer has a melt index of from 0.1 to 30 g/10 min as measured by ASTM D1238-57T.

**Patentansprüche**

1. Eine Methode zur Herstellung von einem biegsamen, offenzelligen, flüssigkeitsdurchlässigen Schaumprodukt aus Äthylenionomer, welche aus den folgenden Schritten besteht: einer Förmung eines flüssigen Gels unter Temperatur und Druck erhöht im Vergleich zu der atmospherischen Temperatur und Druck, welches beinhaltet (a) ein Äthylenionomer welches (1) durch Metallionen quervernetzt ist, (2) 85 bis 98,5 Molarprozente polymerisiertes Äthylen in sich enthält, und (3) hat eine Anfangskristallisationstempteratur, T, in °C, welche die Formel I erfüllt:

$$102-3.02\ (98.5-A) \geqq T \geqq 102-9.29\ (98.5-A) \qquad \text{I}$$

wobei A den Äthylengehalt des Ionomers in Molarprozenten darstellt; und (b) ein Treibmittel und anschließender Strangpressung des resultierenden Gels in eine Zone mit niedrigem Druck und Temperatur um ein offenzelliges Schaumprodukt aus Äthylenionomer darzustellen.

2. Die Methode vom Anspruch 1 wobei der Äthylengehalt, A, des Äthylenionomers von 92 bis 98,5 Molarprozente ist und die Anfangskristallisationstemperatur T°C die Formel II erfüllt:

$$102-3.02\ (98.5-A) \geqq T \geqq 102-8.64\ (98.5-A) \qquad II$$

3. Die Methode vom Anspruch 1, wobei das Äthylenionomer einen Schmelzindex von 0,1 bis 30 g/10 Minuten gemessen nach ASTM D1238-57T hat.

4. Die Methode vom Anspruch 2 wobei das Treibmittel eine flüchtige organische Verbindung ist.

5. Ein biegsamer, offenzelliger, flüssigkeitsdurchlässiger Äthylen-Ionomer-Schaum, hergestellt nach den Ansprüchen 1—4.

6. Der Äthylen-Ionomer-Schaum vom Anspruch 5, wobei der Äthylengehalt, A, des genannten Ionomers in Molarprozenten von 92 bis 98,5 ist und wobei die Anfangskristallisationstemperatur, T, des genannten Ionomers die Formel II erfüllt:

$$102-3.02\ (98.5-A) \geqq T \geqq 102-8.64\ (98.5-A) \qquad II$$

7. Der Äthylen-Ionomer-Schaum von Anspruch 6, wobei das genannte Ionomer einen Schmelzindex von 0,1 bis 30 g/10 Minuten, gemessen nach ASTM D1238-57T, hat.

**Revendications**

1. Procédé de fabrication d'une mousse d'ionomère éthylènique souple, à alvéoles ouverts, perméable aux fluides, qui comprend les étapes de: formation sous une température et une pression élevées par rapport à la température et à la pression atmosphériques d'un gel coulable comprenant (a) un ionomère éthylènique qui (1) est réticulé par des ions métalliques, (2) contient 85 à 98,5 pour cent en mole d'éthylène qui y est polymérisé et (3) possède une température d'amorçage de la cristallisation, T, en degrés C qui répond à la formule I

$$102-3,02\ (98,5-A) \geqq T \geqq 102-9,29\ (98,5-A) \qquad I$$

dans laquelle A représente la teneur en éthylène de l'ionomère en pour cent en mole; et (b) un agent porogène et ensuite extrusion du gel résultant dans une zone de pression et de température plus basses pour former la mousse d'ionomère éthylènique à alvéoles ouverts.

2. Procédé selon la revendication 1, dans lequel la teneur en éthylène, A, de l'ionomère éthylènique est comprise dans l'intervalle de 92 à 98,5 pour cent en mole et la température d'amorçage de la cristallisation T°C, répond à la formule II:

$$102-3,02\ (98,5-A) \geqq T \geqq 102-8,64\ (98,5-A) \qquad II$$

3. Procédé selon la revendication 1, dans lequel l'ionomère éthylènique possède un indice de fusion allant de 0,1 à 30 g/10 min lorsqu'il est mesuré selon ASTM D1238-57T.

4. Procédé selon la revendication 2, dans lequel l'agent porogène est un composé organique volatil.

5. Mousse d'ionomère éthylènique souple, à alvéoles ouverts, perméable aux fluides produite par le procédé selon les revendications 1 à 4.

6. Mousse d'ionomère éthylènique selon la revendication 5, dans laquelle la teneur en éthylène, A, dudit ionomère en pour cent en mole est comprise dans un intervalle de 92 à 98,5 et dans laquelle la température d'amorçage de la cristallisation, T, dudit ionomère satisfait à la formule II:

$$102-3,02\ (98,5-A) \geqq T \geqq 102-8,64\ (98,5-A) \qquad II$$

7. Mousse d'ionomère éthylènique selon la revendication 6, dans laquelle ledit ionomère possède un indice de fusion allant de 0,1 à 30 g/10 min lorsqu'il est mesuré selon ASTM D1238-57T.

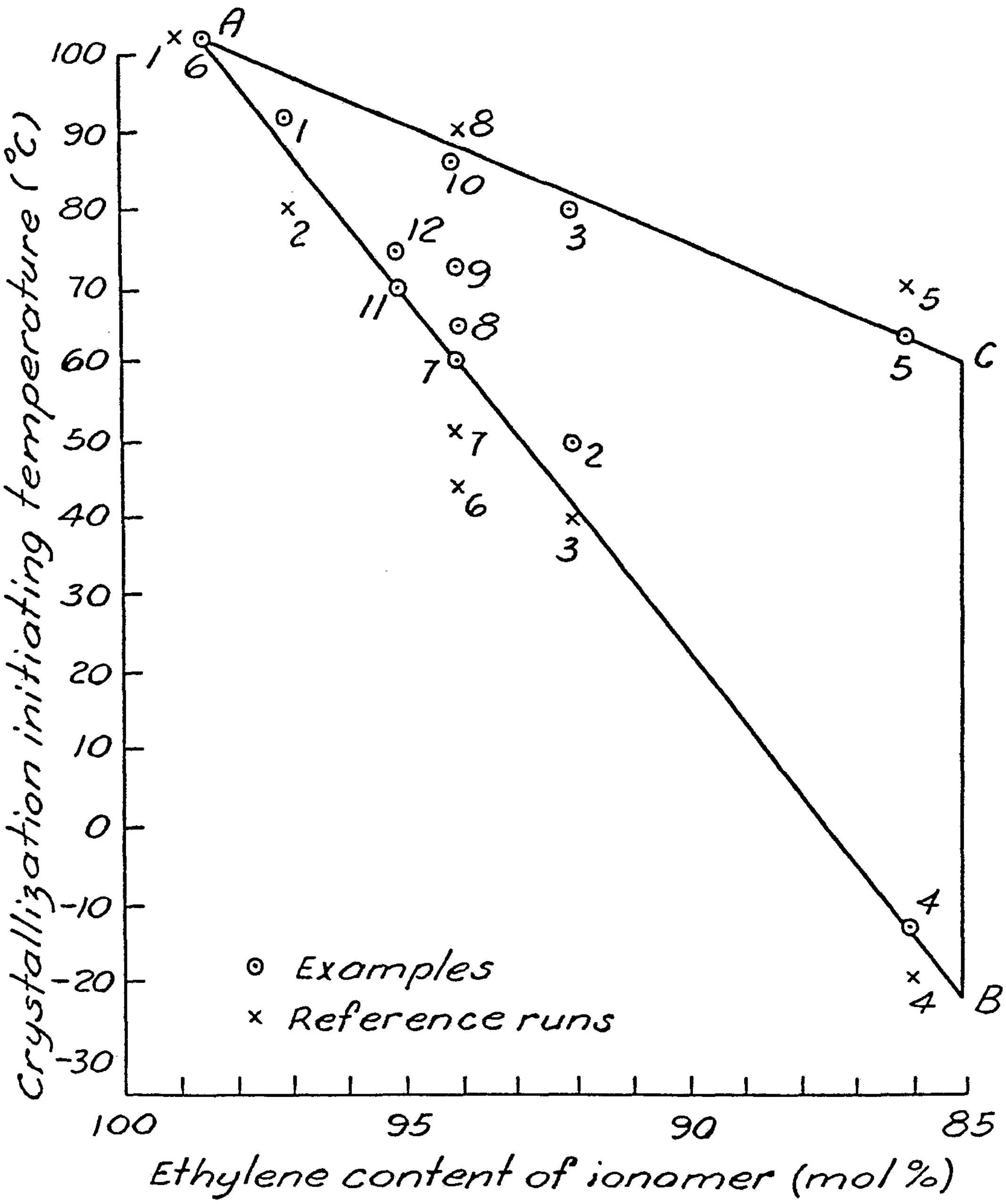

Crystallization initiating temperature (°C)
100
90
80
70
60
50
40
30
20
10
0
-10
-20
-30
A
B
C
1
6
1
2
8
10
3
12
9
11
8
7
5
5
7
6
2
3
4
4
Examples
Reference runs
100
95
90
85
Ethylene content of ionomer (mol %)


Fig. 1

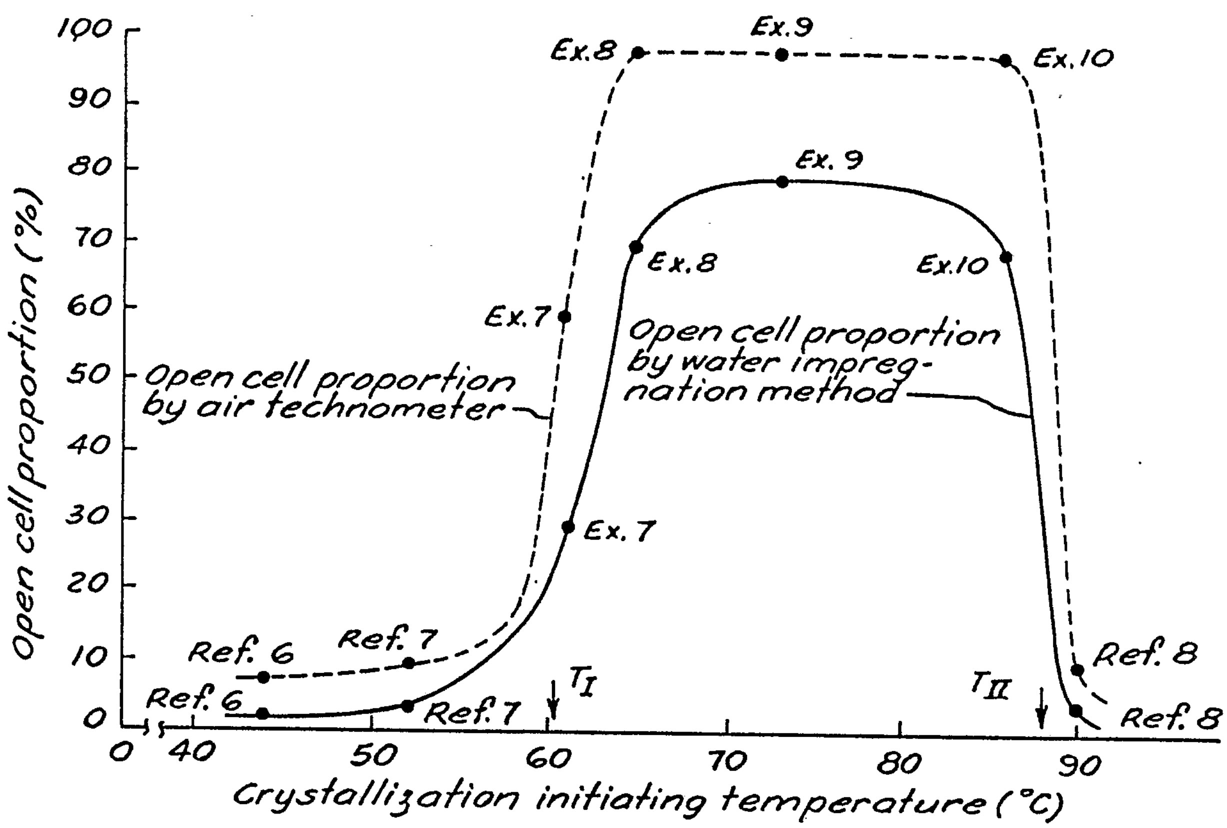
100
90
80
70
60
50
40
30
20
10
0
Open cell proportion (%)
Ex.8
Ex.9
Ex.10
Ex. 9
Ex.8
Ex.10
Ex.7
Open cell proportion by water impregnation method
Open cell proportion by air technometer
Ex. 7
Ref. 6
Ref. 7
Ref. 6
Ref. 7
$T_I$
$T_{II}$
Ref. 8
Ref. 8
0
40
50
60
70
80
90
Crystallization initiating temperature (°C)

Fig. 2